# EUROPÄISCHE PATENTSCHRIFT

(11) **EP 2 767 070 B1**
(45) Veröffentlichungstag und Bekanntmachung des Hinweises auf die Patenterteilung: **13.12.2017**
(21) Anmeldenummer: 12772302.1
(22) Anmeldetag: 09.10.2012
(51) Int. Cl.: B60K 35/00, B60K 37/06, G02B 27/01, G06F 3/01, H04L 29/08

(54) **KOMMUNIKATIONSSYSTEM EINES KRAFTFAHRZEUGES**
COMMUNICATION SYSTEM FOR A VEHICLE
SYSTÈME DE COMMUNICATION POUR UN VÉHICULE

(30) Priorität: 10.10.2011 DE 102011084217
(43) Veröffentlichungstag der Anmeldung: 20.08.2014
(73) Patentinhaber: Continental Automotive GmbH, 30165 Hannover (DE)
(72) Erfinder: HAUBENSCHILD, Frank, 57234 Wilnsdorf (DE)
(86) Internationale Anmeldenummer: PCT/EP2012/069918
(87) Internationale Veröffentlichungsnummer: WO 2013/053678

(56) Entgegenhaltungen:
- US-A1- 2006 238 877

## Beschreibung

Die Erfindung betrifft ein Kommunikationssystem eines Kraftfahrzeuges für Fahrzeuge-zu-Fahrzeug Kommunikation.

Es sind bereits Systeme für die Kommunikation von Fahrzeug zu Fahrzeug bekannt, die auch als C2C- bzw. C2X-Systeme bezeichnet werden. Die Kommunikation erfolgt dabei in der Regel über eine Kurzstrecken-Funkverbindung in Ad-hoc-Netzwerken. Durch diese Systeme ist es möglich, eine Information von einem Fahrzeug zu einer Vielzahl von benachbarten Fahrzeugen zu übertragen. Bei der Information kann es sich beispielsweise um eine Gefahrenmeldung handeln, wobei über Sensoren in einem ersten Fahrzeug eine Gefahr detektiert wird und eine entsprechende Gefahrenmeldung generiert und ausgesendet wird. So können beispielsweise Fahrzeuge über Fahrbahnglätte oder einen Stau informiert werden. Weiterhin ist aus der WO 2008/049868 A1 ein Verfahren zum gezielten Aufbau einer Kommunikationsverbindung mit einem oder mehreren Fahrzeugen bekannt. Die Verbindung wird hierbei mittels Telematikeinheiten in den jeweiligen Fahrzeugen hergestellt. Die Herstellung der Verbindung erfolgt nach Eingabe eines Registrierungskennzeichens des zu rufenden Fahrzeuges.

Darüber hinaus sind verschiedene Informations- und Assistenzsysteme für Fahrzeuge bekannt.

In sogenannten Head-Up-Systemen werden für den Fahrer wichtige Informationen mittels einer Projektionsvorrichtung auf eine Windschutzscheibe eines Fahrzeuges projiziert. Hierbei handelt es sich beispielsweise um die Geschwindigkeit oder um einen Navigationshinweis.

Des Weiteren sind sogenannte Nachtsichtsysteme bekannt, bei denen mittels einer Infrarotkamera oder mittels Radar der vor dem Fahrzeug liegende Straßenverlauf überwacht wird, wobei Personen oder Tiere erkannt werden können und mittels des Head-Up-Displays eine entsprechende Warnung auf die Windschutzscheibe projiziert werden kann.

Darüber hinaus sind Blickerfassungssysteme bekannt, bei denen die Augenbewegung einer Person mittels einer Kamera erfasst wird und eine Blickrichtung bestimmt wird.

Aus der US 2006/0238877 A1 ist für dem militärischen Einsatz ein System bekannt mit
- einer beispielsweise in einem Kraftfahrzeug angeordneten und auf einen Fahrer ausgerichteten Bilderfassungseinrichtung,
- einem Auswertemodul zur Bestimmung einer detektierten Blickrichtung des Fahrers aus dem von der Bilderfassungseinrichtung erfassten Bild,
- Bestimmung einer Sichtlinie des Fahrers und
- Anzeige eines Bildes zu einem in der Sichtlinie liegenden Objekt auf der Windschutzscheibe an der Stelle, an der die Sichtlinie die Windschutzscheibe schneidet.
Gemäß einer anderen Ausführungsform der US 2006/0238877 A1 kann eine Bedienvorrichtung zur Auswahl eines in Blickrichtung liegenden Objekts als Ziel vorhanden sein.

Aufgabe der Erfindung ist es, ein Kommunikationssystem eines Kraftfahrzeuges anzugeben, dass auf einfache Weise eine gezielte Kommunikation mit einem außerhalb des Fahrzeugs befindlichen Objekts erlaubt.

Eine weitere Aufgabe der Erfindung besteht darin, ein Verfahren zur Herstellung einer Fahrzeug-zu-Objekt Kommunikation anzugeben, bei dem das Objekt einfach auswählbar ist.

Die Aufgabe wird durch ein Kommunikationssystem bzw. ein Verfahren mit den Merkmalen der unabhängigen Patentansprüche gelöst.

Das erfindungsgemäße Kommunikationssystem weist eine im Kraftfahrzeug angeordnete und auf einen Fahrer ausgerichtete erste Bilderfassungseinrichtung auf. Der ersten Bilderfassungseinrichtung ist ein erstes Auswertemodul zur Bestimmung einer detektierten Blickrichtung des Fahrers aus dem von der ersten Bilderfassungseinrichtung erfassten Bild zugeordnet. Weiterhin weist das Kommunikationssystem Mittel zur Bestimmung eines Schnittpunktes der detektierten Blickrichtung und einer Windschutzscheibe des Kraftfahrzeugs auf.

Die Position des Fahrers im Kraftfahrzeug ist bereits grundsätzlich durch den entsprechenden Sitzplatz vorbestimmt und kann nur in engen Grenzen durch Verstellung des Sitzes variiert werden. Gegebenenfalls kann die Position des Fahrers aufgrund des Bildes der ersten Bilderfassungseinrichtung noch genauer festgelegt werden. Dies betrifft insbesondere die Position der Augen.

Aufgrund der festgelegten Geometrie des Kraftfahrzeuges sind weiterhin die Position und der Verlauf einer Windschutzscheibe bekannt. Mit diesen bekannten Daten kann mit der detektierten Blickrichtung des Fahrers durch entsprechende, in der Regel als Computerprogramm ausgeführte Mittel ein Schnittpunkt der detektierten Blickrichtung und der Windschutzscheibe des Kraftfahrzeuges bestimmt werden.

Weiterhin weist das Kommunikationssystem eine Projektionsvorrichtung auf, mit der eine Markierung auf die Windschutzscheibe projiziert werden kann. Die Projektionsvorrichtung steht mit den Mitteln zur Bestimmung des Schnittpunktes in Verbindung. Die Markierung auf der Windschutzscheibe wird nun so platziert, dass sie den berechneten Schnittpunkt zwischen der detektierten Blickrichtung des Fahrers und der Windschutzscheibe umfasst. Blickt somit der Fahrer durch die Windschutzscheibe beispielsweise auf ein anderes Fahrzeug, so wird durch die genannten Maßnahmen eine Markierung auf die Windschutzscheibe projiziert, die genau dieses Fahrzeug aus Sicht des Fahrers markiert. Mit anderen Worten kann der Fahrer allein über seine Blickrichtung ein bestimmtes Objekt auswählen, wobei das ausgewählte Projekt durch die auf die Windschutzscheibe projizierte Markierung aus Sicht des Fahrers markiert wird. Somit kann eine hohe Genauigkeit bei der Auswahl des entsprechenden Objekts erzielt werden.

Das Kommunikationssystem weist weiterhin eine durch den Fahrer bedienbare Bestätigungseinrichtung auf, mit der der Fahrer bestätigen kann, dass das markierte Objekt der gewünschte Empfänger bzw. Kommunikationspartner ist. Über eine Kommunikationsvorrichtung kann nun bei Vorliegen eines Bestätigungssignals der Bestätigungseinrichtung ein Signal an einen mit der Markierung aus der detektierten Blickrichtung des Fahrers markierten Empfänger ausgesendet werden.

Das erfindungsgemäße Kommunikationssystem bietet somit eine einfache und sichere Auswahl eines Kommunikationspartners. Das Kommunikationssystem kann weiterhin eine im Kraftfahrzeug angeordnete, auf einen Straßenverlauf vor dem Kraftfahrzeug ausgerichtete zweite Bilderfassungseinrichtung und ein zweites Auswertemodul zur Bestimmung eines Objekts im erfassten Bild der zweiten Bilderfassungseinrichtung, das sich in Blickrichtung des Fahrers außerhalb des Fahrzeugs befindet und Mittel zur Festlegung dieses Objekts als den markierten Empfänger umfassen. Hierdurch kann die Position des markierten Empfängers genauer bestimmt werden, und es können gegebenenfalls Daten des markierten Empfängers aus dem Bild extrahiert werden.

Die Kommunikationsvorrichtung kann eine elektromagnetische Kurzstreckenfunkvorrichtung sein. Dies hat den Vorteil, dass bekannte Fahrzeug-zu-Fahrzeug Kommunikationsvorrichtungen verwendet werden können.

Weiterhin weist das Kommunikationssystem Mittel zur Ermittlung einer Empfangsadresse des markierten Empfängers auf. Dies hat den Vorteil, dass die Empfangsadresse des markierten Empfängers dem Fahrer des Kraftfahrzeugs nicht bekannt sein muss und von diesem auch nicht manuell eingegeben werden muss.

Weiterhin kann ein solches Kommunikationssystem Mittel zur Bestimmung einer Position des Kraftfahrzeugs und Mittel zur Ermittlung der Empfangsadresse aufgrund einer von dem markierten Empfänger empfangenen Positionsangabe und Empfangsadresse aufweisen. Hierbei kann somit die eigene Position des Kraftfahrzeuges absolut bestimmt werden, beispielsweise als Längen- und Breitengradangabe. Am einfachsten ist dies über bekannte Satellitennavigation möglich. Aus der empfangenen Positionsangabe des markierten Empfängers kann somit dessen relative Position zum Kraftfahrzeug bestimmt werden, so dass der markierte Empfänger von anderen ebenfalls Funksignale aussendenden Objekten in der Nähe des Kraftfahrzeuges unterschieden werden kann. Somit kann sicher unterschieden werden, welches Funksignal von dem markierten Empfänger ausgesendet wird. Enthält dieses Funksignal die Empfangsadresse des markierten Empfängers, so kann diese direkt für die Kommunikationsaufnahme verwendet werden. Auf diese Weise kann besonders einfach eine Kommunikationsverbindung zwischen dem Kraftfahrzeug und dem markierten Empfänger hergestellt werden.

In einer alternativen Ausführungsform kann die Ermittlung der Empfangsadresse aufgrund einer Extraktion einer Kennung des markierten Empfängers aus dem durch die zweite Bilderfassungseinrichtung erfassten Bild erfolgen. Beispielsweise kann aus dem aufgenommenen Bild ein Kraftfahrzeugkennzeichen ermittelt werden, wobei diesem Kraftfahrzeugkennzeichen eindeutig eine Empfangsadresse für die Verbindungsaufnahme zugeordnet ist. Die Empfangsadresse kann dabei entweder direkt aus dem Kennzeichen ermittelt werden oder im Kraftfahrzeug wird eine Zuordnungstabelle zwischen bekannten Kraftfahrzeugen und Empfangsadressen abgelegt oder die dem Kennzeichen zugeordnete Empfangsadresse wird bei einer Zentrale abgefragt. Auch bei dieser Ausführungsform entfällt die manuelle Eingabe einer Empfangsadresse.

In einer weiteren Ausführungsform kann die Kommunikationsvorrichtung auch als optische Kurzstreckenkommunikationsvorrichtung ausgebildet sein. Hierbei ist im Kraftfahrzeug beispielsweise eine optische Sendeeinheit in Form einer Leuchtdiode vorhanden, die moduliertes Licht, das die Sendeinformation trägt, aussendet.

In einer besonderen Ausführungsform kann die Kommunikationsvorrichtung zur gerichteten Aussendung eines Signals in einem bezüglich der Längsachse des Kraftfahrzeugs veränderbaren Raumwinkel ausgebildet sein. Bei dieser Ausführungsform weist die optische Sendeeinheit somit einen festen Abstrahlwinkel auf und ist in ihrer Abstrahlrichtung bezüglich der Längsachse des Kraftfahrzeugs veränderbar. Somit kann die optische Sendeeinheit direkt auf das ausgewählte Objekt ausgerichtet und die Information ausschließlich an dieses Objekt übertragen werden. Die Kenntnis einer Empfangsadresse des ausgewählten Objekts ist bei dieser Ausgestaltung nicht erforderlich.

Ein erfindungsgemäßes Verfahren zur Festlegung eines Kommunikationspartners in einer Fahrzeug-zur-Objekt Kommunikation weist die folgenden Verfahrensschritte auf:
- eine Blickrichtung eines Fahrers des Kraftfahrzeugs wird detektiert,
- ein Schnittpunkt der Blickrichtung des Fahrers mit einer Windschutzscheibe des Kraftfahrzeugs wird bestimmt,
- eine Markierung wird auf die Windschutzscheibe projiziert, wobei die Position der Markierung den Schnittpunkt umfasst und
- ein aus der detektierten Blickrichtung des Fahrers mit der Markierung markiertes Objekt außerhalb des Fahrzeugs wird als Kommunikationspartner ausgewählt,
- eine von dem markierten Objekt ausgesendete Empfangsadresse wird von dem Kraftfahrzeug empfangen.

Das markierte Objekt kann von dem Fahrer als Kommunikationspartner über eine manuelle oder sprachgesteuerte Bestätigungseinrichtung ausgewählt werden.

Weitere vorteilhafte Ausgestaltungen sind in den abhängigen Ansprüchen angegeben.

Die Erfindung wird nachfolgend anhand der Zeichnung und Ausführungsbeispiele näher erläutert. Es zeigen:
- Fig. 1: eine schematische Darstellung zur Erläuterung der Identifizierung eines markierten Objekts als Kommunikationspartner,
- Fig. 2: ein Blockschaltbild des Kommunikationssystems.

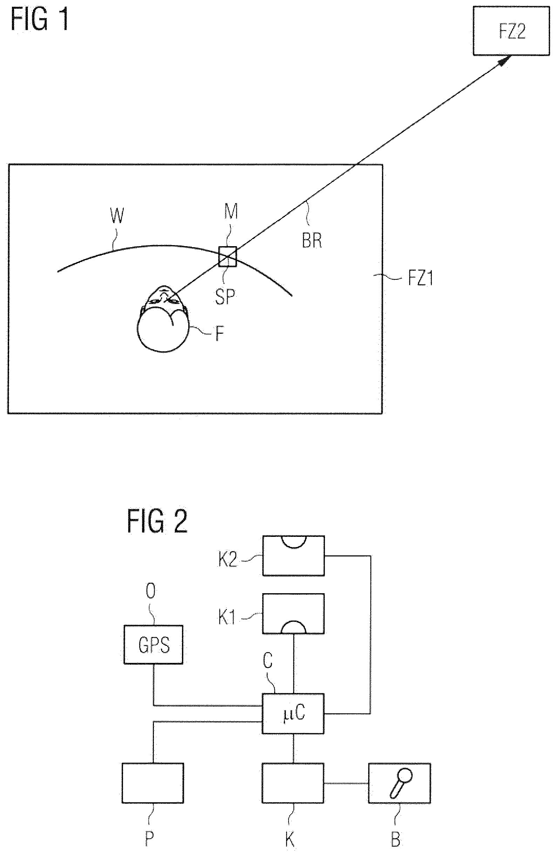

Figur 1 zeigt eine schematische Darstellung zur Erläuterung der Detektion eines Objekts als Empfänger. Ein Kraftfahrzeug FZ1 wird von einem Fahrer F gesteuert, die Blickrichtung BR des Fahrers wird detektiert und aus der detektierten Blickrichtung BR wird bei bekannter Position des Fahrers F und der Windschutzscheibe W des Fahrzeuges FZ1 ein Schnittpunkt ST der Blickrichtung BR des Fahrers F mit der Windschutzscheibe W bestimmt. In Blickrichtung BR des Fahrers F befindet sich ein weiteres Fahrzeug FZ2 als detektiertes Objekt. Auf die Windschutzscheibe W wird eine Markierung M projiziert, die den Schnittpunkt SP umfasst. Aus Sicht des Fahrers F mit der Blickrichtung BR wird somit durch die Markierung M das weitere Fahrzeug FZ2 markiert. Durch diese Markierung M wird sichergestellt, dass das durch die am Verfahren beteiligten Komponenten des Kommunikationssystems ermittelte Objekt, nämlich das Fahrzeug FZ2, auch mit dem von dem Fahrer F gewünschten und durch die Blickrichtung BR ausgewählten Objekt als Kommunikationspartner übereinstimmt. Hierdurch kann die Zuverlässigkeit des Systems weiter erhöht werden und eine fälschliche Identifizierung eines anderen Objekts vermieden werden. Stimmt das durch die Markierung M markierte Objekt mit dem als Kommunikationspartner gewünschte Objekt überein, so bestätigt dies der Fahrer, woraufhin eine Kommunikationsverbindung zu dem gewünschten Kommunikationspartner hergestellt wird. Auf diese Weise kann beispielsweise dem Fahrzeug FZ2 von dem Fahrzeug FZ1 signalisiert werden, dass der Fahrer F des Fahrzeugs FZ1 auf sein Vorfahrtsrecht verzichtet und dem an sich nicht vorfahrtsberechtigten Fahrzeug FZ2 die Vorfahrt gewährt. Eine solche Absicht zur Gewährung der Vorfahrt wird herkömmlicherweise im Straßenverkehr häufig durch entsprechende Gesten oder Lichtzeichen mittels der Lichtanlage des Kraftfahrzeugs kundgetan. Allerdings sind diese Zeichen nicht immer eindeutig und haben insbesondere auch in verschiedenen Ländern verschiedene Bedeutung. Diese bestehende Unsicherheit kann mit dem erfindungsgemäßen Kommunikationssystem bzw. dem erfindungsgemäßen Verfahren ausgeräumt werden. Darüber hinaus kann die Aufnahme einer Kommunikationsverbindung zu einem ausgewählten Objekt aber auch zu anderen Zwecken erfolgen.

Fig. 2 zeigt die einzelnen Komponenten des Kommunikationssystems und deren Zusammenspiel. Über eine als Kamerasystem ausgebildete erste Bilderfassungseinrichtung K1 wird die Augenbewegung des Fahrers F erfasst. Die erste Bilderfassungseinrichtung K1 ist im Fahrzeug beispielsweise in einem Dachmodul angeordnet und auf den Fahrer F ausgerichtet. Mittels eines entsprechenden Computerprogramms wird von einer Recheneinheit C, die als Mikrocomputer ausgebildet sein kann, eine Blickrichtung des Fahrers bestimmt. Die Recheneinheit C ermittelt aus der detektierten Blickrichtung des Fahrers F, der bekannten Position des Fahrers F, die gegebenenfalls aufgrund des Bildes der ersten Bilderfassungseinrichtung K1 genauer festgelegt werden kann, und den Daten zur geometrischen Anordnung der Windschutzscheibe W einen Schnittpunkt der Blickrichtung BR des Fahrers F mit der Windschutzscheibe W und leitet diese Information an die Projektionsvorrichtung P weiter. Die Projektionsvorrichtung P, bei der es sich um ein an sich bekanntes Head-Up-Display handeln kann, projiziert nun eine Markierung an dem Schnittpunkt P auf die Windschutzscheibe W. Durch diese Markierung M wird somit ein in Blickrichtung BR des Fahrers F liegendes Objekt (zweites Fahrzeug FZ2) durch die Markierung M markiert. Die Markierung M kann beispielsweise als ein Pfeil oder ein Kreis oder als eine Fahrzeugsilhouette ausgebildet sein. Darüber hinaus kann die Markierung M auch in Anlehnung an bekannte Verkehrszeichen ausgebildet sein. Beispielsweise kann die Markierung M als ein Vorfahrtszeichen mit einem darin befindlichen Fragezeichen ausgebildet sein, um dem Fahrer F einen Hinweis zu geben, ob er dem markierten Objekt die Vorfahrt einräumen will.

Über eine Bestätigungseinrichtung B bestätigt der Fahrer F, dass er mit dem ausgewählten und mit der Markierung versehenen Objekt kommunizieren will. Die Bestätigungseinrichtung B kann beispielsweise als manuelle Bestätigungseinrichtung mit einem entsprechenden Bedienelement oder als sprachgesteuerte Bestätigungseinrichtung ausgebildet sein. Die Bestätigungseinrichtung B ist mit der Kommunikationsvorrichtung K verbunden. Erhält die Kommunikationsvorrichtung K von der Bestätigungseinrichtung B ein entsprechendes Signal, so baut die Kommunikationsvorrichtung K eine Kommunikationsverbindung mit dem ausgewählten Objekt auf, dessen Kommunikationsdaten die Kommunikationsvorrichtung K von der Recheneinheit C erhält. Die Adresse des als Kommunikationspartner ausgewählten Objektes kann grundsätzlich von dem Fahrer F in das Kommunikationssystem eingegeben werden. Vorteilhafter ist jedoch eine automatische Ermittlung der Kommunikationsadresse. Eine solche automatische Ermittlung wird anhand von zwei Ausführungsvarianten nachfolgend erläutert.

Gemäß der ersten Ausführungsvariante ist mit der Recheneinheit C eine zweite Bilderfassungseinrichtung K2, die ebenfalls als Kamerasystem ausgebildet ist, vorgesehen. Die zweite Bilderfassungseinrichtung K2 ist auf den Straßenverlauf vor dem Fahrzeug FZ1 ausgerichtet. Über die zweite Bilderfassungseinrichtung K2 werden somit Objekte detektiert, die sich direkt oder auch seitlich vor dem Fahrzeug FZ1 befinden. Aufgrund der detektierten Blickrichtung BR des Fahrers F und des von der zweiten Bilderfassungseinrichtung K2 aufgenommenen Abbildes der Umgebung vor dem Fahrzeug FZ1 kann durch die Recheneinheit C bestimmt werden, welches Objekt aus dem aufgenommenen Bild der zweiten Bilderfassungseinrichtung K2 in Blickrichtung BR des Fahrers liegt. Anschließend kann durch Bilderkennung ein Kennzeichen dieses Objektes identifiziert werden. Aus dem identifizierten Kennzeichen kann schließlich eine Kommunikationsadresse des detektierten Objekts abgeleitet werden. Hierzu ist es denkbar, dass die Kommunikationsadresse über einen festgelegen Algorithmus direkt aus dem identifizierten Kennzeichen abgeleitet werden kann. Alternativ können auch in einer Speichereinheit der Recheneinheit C Zuordnungen von Kennzeichen zu Kommunikationsadressen abgelegt sein, wobei aufgrund des identifizierten Kennzeichens die zugehörige Kommunikationsadresse aufgefunden werden kann. Weiterhin kann die Kommunikationsadresse mit dem Kennzeichen auch bei einer Zentralstelle über eine Funkverbindung abgefragt werden. Anschließend kann eine gewünschte Information, die beispielsweise per Spracheingabe zur Verfügung gestellt wird, mittels der Kommunikationsvorrichtung K an das detektierte Objekt übermittelt werden. Bei dieser Ausgestaltung ist prinzipiell eine unidirektionale Ausgestaltung der Kommunikationsvorrichtung ausreichend.

In einer zweiten Ausführungsvariante weist das Kommunikationssystem zusätzlich ein Ordnungsmodul O auf, das vorzugsweise als Satellitennavigationsmodul arbeitet. Mittels des Ordnungsmoduls O kann die eigene Position des Kraftfahrzeuges FZ1 absolut bestimmt werden. Das als ausgewähltes Objekt detektierte Kraftfahrzeug FZ2 sendet seine absoluten Positionsdaten und seine Kommunikationsadresse aus. Auch andere Fahrzeuge sind mit entsprechenden Systemen ausgestattet und senden ebenfalls ihre Positionsdaten und ihre Kommunikationsadressen aus. Aufgrund der detektierten eigenen Position des Kraftfahrzeuges FZ1 und der übermittelten Positionsdaten des Kraftfahrzeuges FZ2 und der aufgrund der Blickrichtung BR festgelegten relativen Position zwischen Fahrzeug FZ1 und FZ2 kann das Fahrzeug FZ2 eindeutig als der gewünschte Kommunikationspartner festgelegt werden. Die von dem Fahrzeug FZ2 übermittelte Kommunikationsadresse wird vom Kommunikationssystem K des Fahrzeugs FZ1 empfangen und als Kommunikationsadresse zur Aufnahme einer Kommunikation mit dem Fahrzeug FZ2 verwendet. Auch bei dieser Variante wird somit eine Kommunikationsadresse des ausgewählten Objekts automatisch ermittelt. Das Fahrzeug FZ1 kann insbesondere nun auch seine eigene Kommunikationsadresse an das Fahrzeug FZ2 übermitteln und eine bidirektionale Kommunikation starten.

Das Kommunikationssystem kann somit je nach Ausführungsform entweder unidirektional oder bidirektional ausgebildet sein. Insbesondere weist das Kommunikationssystem hierbei als elektromagnetische Kurzstreckenfunkvorrichtung auf.

In einer weiteren Ausführungsvariante ist das Kommunikationssystem als optisches Kommunikationssystem ausgebildet. Hierbei kann es insbesondere auch als unidirektionales optisches Kommunikationssystem ausgebildet sein, wobei die Informationsübertragung mittels eines nach außerhalb des Fahrzeugs moduliert Licht aussendenden Leuchtmittels erfolgt. Das Leuchtmittel kann insbesondere eine LED sein. Die zu übermittelnde Information ist dann in der Lichtmodulation enthalten. Mit der optischen Kommunikationsvorrichtung kann auch gezielt mit dem ausgewählten Objekt eine Verbindung aufgenommen werden, wenn der Abstrahlwinkel des Leuchtmittels hinreichend eng ist und die Abstrahlrichtung des Leuchtmittels variabel ist. In diesem Fall kann die Abstrahlrichtung direkt auf das detektierte Objekt ausgerichtet werden. Diese Ausgestaltung hat den Vorteil, dass eine Kommunikationsadresse des detektierten Objekts nicht erforderlich ist.

## Patentansprüche

1. Kommunikationssystem eines Kraftfahrzeugs (FZ1) mit
- einer im Kraftfahrzeug (FZ1) angeordneten, auf einen Fahrer (F) ausgerichteten ersten Bilderfassungseinrichtung (K1),
- einem ersten Auswertemodul zur Bestimmung einer detektierten Blickrichtung (BR) des Fahrers aus dem von der der ersten Bilderfassungseinrichtung (K1) erfassten Bild,
- Mitteln zur Bestimmung eines Schnittpunktes (SP) der detektierten Blickrichtung (BR) und einer Windschutzscheibe (W) des Kraftfahrzeugs (FZ1),
- eine mit den Mitteln zur Bestimmung des Schnittpunktes (SP) in Verbindung stehenden Projektionsvorrichtung (P) zur Projektion einer Markierung (M) auf die Windschutzscheibe (W), wobei die Position der Markierung (M) den Schnittpunkt (SP) umfasst
- einer durch den Fahrer (F) bedienbaren Bestätigungseinrichtung (B),
**dadurch gekennzeichnet, dass** das Kommunikationssystem weiterhin aufweist:
- eine Kommunikationsvorrichtung (K) zur Aussendung eines Signals an einen mit der Markierung (M) aus der detektierten Blickrichtung (BR) des Fahrers (F) markierten Empfänger bei Vorliegen eines Bestätigungssignals der Bestätigungseinrichtung (B),
- Mittel zur Ermittlung einer Empfangsadresse des markierten Empfängers.

2. Kommunikationssystem nach Anspruch 1, **gekennzeichnet durch** eine im Kraftfahrzeug (FZ1) angeordnete, auf einen Straßenverlauf vor dem Kraftfahrzeug (FZ1) ausgerichtete zweite Bilderfassungseinrichtung (K2) und ein zweites Auswertemodul zur Bestimmung eines Objekts im erfassten Bild der zweiten Bilderfassungseinrichtung (K2), das sich in Blickrichtung (BR) des Fahrers (F) außerhalb des Fahrzeugs (FZ1) befindet und Mittel zur Festlegung dieses Objekts als den markierten Empfänger.

3. Kommunikationssystem nach einem der vorhergehenden Ansprüche, **dadurchgekennzeichnet,** dass die Kommunikationsvorrichtung (K) eine elektromagnetische Kurzstreckenfunkvorrichtung ist.

4. Kommunikationssystem nach einem der vorhergehenden Ansprüche, **gekennzeichnet durch** Mittel zur Ermittlung einer Empfangsadresse des markierten Empfängers.

5. Kommunikationssystem nach Anspruch 3, **gekennzeichnetdurch** Mittel zur Bestimmung einer Position des Kraftfahrzeugs und Mittel zur Ermittlung der Empfangsadresse aufgrund einer von dem markierten Empfänger empfangenen Positionsangabe und Empfangsadresse.

6. Kommunikationssystem nach Anspruch 3, **dadurch gekennzeichnet, dass** die Ermittlung der Empfangsadresse aufgrund einer Extraktion einer Kennung des markierten Empfängers aus dem durch die zweite Bilderfassungseinrichtung (K2) erfassten Bild erfolgt.

7. Kommunikationssystem nach einem der vorhergehenden Ansprüche, **dadurch gekennzeichnet, dass** die Kommunikationsvorrichtung (K) als optische Kurzstreckenkommunikationsvorrichtung ausgebildet ist.

8. Kommunikationssystem nach Anspruch 6, **dadurch gekennzeichnet, dass** die Kommunikationsvorrichtung zur gerichteten Aussendung des Signals in einer bezüglich einer Längsachse des Kraftfahrzeugs (FZ1) veränderbaren Raumrichtung ausgebildet ist.

9. Kommunikationssystem nach Anspruch 6 oder 7, **dadurch gekennzeichnet, dass** das optische Kommunikationssystem ein nach außerhalb des Fahrzeugs moduliert Licht aussendendes Leuchtmittel ausweist.

10. Verfahren zur Festlegung eines Kommunikationspartners in einer Fahrzeug-zu-Objekt Kommunikation, wobei
- eine Blickrichtung (BR) eines Fahrers des Kraftfahrzeugs (FZ1) detektiert wird
- ein Schnittpunkt (SP) der Blickrichtung des Fahrers (F) mit einer Windschutzscheibe (W) des Kraftfahrzeugs (FZ1) bestimmt wird
- eine Markierung (M) auf die Windschutzscheibe (W) projiziert wird, wobei die Position der Markierung (M) den Schnittpunkt (SP) umfasst und
- ein aus der detektierten Blickrichtung (BR) des Fahrers (F) mit der Markierung (M) markiertes Objekt außerhalb des Fahrzeugs (FZ1) als Kommunikationspartner ausgewählt wird, **dadurchgekennzeichnet,** dass eine von dem markierten Objekt ausgesendete Empfangsadresse von dem Kraftfahrzeug empfangen wird.

11. Verfahren nach Anspruch 10, **dadurch gekennzeichnet, dass** das markierte Objekt von dem Fahrer (F) als Kommunikationspartners über eine manuelle oder sprachgesteuerte Bestätigungseinrichtung (B) ausgewählt wird.

12. Verfahren nach Anspruch 10 oder 11, **dadurch gekennzeichnet, dass** eine Auswahl der Empfangsadresse des markierten Objekts aus einer Vielzahl von empfangenen Empfangsadressen von Objekten durch Vergleich von von dem markierten Objekt empfangenen Positionsdaten mit den Positionsdaten des Kraftfahrzeugs (FZ1) und der detektierten Blickrichtung (BR) des Fahrers erfolgt.

13. Verfahren zur Herstellung einer Fahrzeug-zu-Objekt Kommunikation, bei dem der Kommunikationspartner gemäß Anspruch 10 oder 11 festgelegt wird, **dadurch gekennzeichnet, dass** eine Empfangsadresse des Kommunikationspartners ermittelt wird durch
- Aufnehmen eines Bildes des Kommunikationspartners mit einer Bilderfassungseinrichtung (K2) und
- Extrahieren einer Kennung des Kommunikationspartners aus dem ausgenommenen Bild, wobei die Kennung die Empfangsadresse ist oder die Empfangsadresse aus der Kennung ermittelt wird.

14. Verfahren nach einem der vorhergehenden Ansprüche,
**dadurch gekennzeichnet, dass** das Objekt ein zweites Kraftfahrzeug (FZ2) mit einer Empfangseinrichtung ist.

## Claims

1. Communication system of a motor vehicle (FZ1) having
- a first image acquisition device (K1) situated in the motor vehicle (FZ1) and oriented toward a driver (F),
- a first evaluation module for determining a detected viewing direction (BR) of the driver from the image acquired by the first image acquisition device (K1),
- means for determining a point of intersection (SP) of the detected viewing direction (BR) and a windshield (W) of the motor vehicle (FZ1),
- a projection device (P) for projecting a marking (M) onto the windshield (W) being in contact with the means for determining the point of intersection (SP), wherein the position of the marking (M) comprises the point of intersection (SP),
- a confirmation device (B) that is operable by the driver (F) ,
**characterized in that** the communication system furthermore has:
- a communication device (K) for transmitting a signal to a receiver that is marked with the marking (M) from the detected viewing direction (BR) of the driver (F), if a confirmation signal of the confirmation device (B) is present,
- means for ascertaining a reception address of the marked receiver.

2. Communication system according to Claim 1, **characterized by** a second image acquisition device (K2) that is situated in the motor vehicle (FZ1) and oriented toward a road course in front of the motor vehicle (FZ1), and a second evaluation module for determining an object in the acquired image of the second image acquisition device (K2) that is situated outside the vehicle (FZ1) in the viewing direction (BR) of the driver (F), and means for determining this object as the marked receiver.

3. Communication system according to one of the preceding claims, **characterized in that** the communication device (K) is an electromagnetic short-range radio device.

4. Communication system according to one of the preceding claims, **characterized by** means for ascertaining a reception address of the marked receiver.

5. Communication system according to Claim 3, **characterized by** means for determining a position of the motor vehicle and means for ascertaining the reception address based on a position specification and reception address received by the marked receiver.

6. Communication system according to Claim 3, **characterized in that** the reception address is ascertained based on an extraction of an identifier of the marked receiver from the image acquired by the second image acquisition device (K2).

7. Communication system according to one of the preceding claims, **characterized in that** the communication device (K) is designed as an optical short-range communication device.

8. Communication system according to Claim 6, **characterized in that** the communication device is designed for the direction transmission of the signal in a spatial direction that is changeable with respect to a longitudinal axis of the motor vehicle (FZ1).

9. Communication system according to Claim 6 or 7, **characterized in that** the optical communication system has a light-emitting lighting means modulated to the outside of the vehicle.

10. Method for determining a communication partner in a vehicle-to-object communication, wherein
- a viewing direction (BR) of a driver of the motor vehicle (FZ1) is detected,
- a point of intersection (SP) of the viewing direction of the driver (F) with a windshield (W) of the motor vehicle (FZ1) is determined,
- a marking (M) is projected onto the windshield (W), wherein the position of the marking (M) comprises the point of intersection (SP), and
- an object outside the vehicle (FZ1) marked with the marking (M) from the detected viewing direction (BR) of the driver (F) is selected as a communication partner, **characterized in that** a reception address transmitted by the marked object is received by the motor vehicle.

11. Method according to Claim 10, **characterized in that** the marked object is selected by the driver (F) as a communication partner via a manual or voice-controlled confirmation device (B).

12. Method according to Claim 10 or 11, **characterized in that** a selection of the reception address of the marked object is made from a plurality of received reception addresses of objects by comparison of position data received by the marked object with the position data of the motor vehicle (FZ1) and the detected viewing direction (BR) of the driver.

13. Method for establishing a vehicle-to-object communication, in which the communication partner is determined according to Claim 10 or 11, **characterized in that** a reception address of the communication partner is ascertained by
- recording an image of the communication partner using an image acquisition device (K2) and
- extracting an identifier of the communication partner from the recorded image, wherein the identifier is the reception address, or the reception address is ascertained from the identifier.

14. Method according to one of the preceding claims, **characterized in that** the object is a second motor vehicle (FZ2) having a receiving device.

## Revendications

1. Système de communication d'un véhicule à moteur (FZ1) avec :
- un premier mécanisme de prise de vues (K1), lequel est disposé dans le véhicule à moteur (FZ1) et lequel est dirigé sur le conducteur (F) ;
- un premier module d'évaluation destiné à la détermination d'une direction du regard (BR) du conducteur, laquelle a été détectée à partir de l'image prise par le premier mécanisme de prise de vues (K1) ;
- des moyens destinés à la détermination d'un point d'intersection (SP) constitué par la direction du regard (BR) qui a été détectée et un pare-brise (W) du véhicule à moteur (FZ1) ;
- un dispositif de projection (P), lequel se trouve en liaison avec les moyens destinés à la détermination du point d'intersection (SP), en vue de la projection d'un repère (M) sur le pare-brise (W) ;
selon lequel la position du repère (M) comprend le point d'intersection (SP) ;
- un mécanisme de confirmation (B), lequel peut être utilisé par le conducteur (F) ;
**caractérisé en ce que**
le système de communication présente en outre :
- un dispositif de communication (K) destiné à la transmission d'un signal à un récepteur qui est distingué au moyen du repère (M) à partir de la direction du regard (BR) du conducteur (F) qui a été détectée, en présence d'un signal de confirmation du mécanisme de confirmation (B) ;
- des moyens destinés à la recherche d'une adresse de destination du récepteur ainsi distingué.

2. Système de communication selon la revendication 1, **caractérisé par** un deuxième mécanisme de prise de vues (K2), lequel est disposé dans le véhicule à moteur (FZ1) et lequel est dirigé sur une géométrie de la route qui se trouve devant le véhicule à moteur (FZ1) ; et
**caractérisé par** un deuxième module d'évaluation destiné à la détermination d'un objet qui se trouve dans l'image prise par le deuxième mécanisme de prise de vues (K2), lequel objet se situe à l'extérieur du véhicule (FZ1), dans la direction du regard (BR) du conducteur (F) ; et
**caractérisé par** des moyens destinés à la désignation de cet objet comme étant le récepteur distingué.

3. Système de communication selon l'une des revendications précédentes, **caractérisé en ce que** le dispositif de communication (K) est un dispositif électromagnétique de radiocommunication à courte portée.

4. Système de communication selon l'une des revendications précédentes, **caractérisé par** des moyens destinés à la recherche d'une adresse de destination du récepteur distingué.

5. Système de communication selon la revendication 3, **caractérisé par** des moyens destinés à la détermination d'une position du véhicule à moteur ; et
**caractérisé par** des moyens destinés à la recherche de l'adresse de destination sur la base d'une adresse de destination et d'une indication de la position reçue par le récepteur distingué.

6. Système de communication selon la revendication 3, **caractérisé en ce que** la recherche de l'adresse de destination a lieu sur la base d'une extraction d'un identifiant du récepteur distingué à partir de l'image prise par le deuxième mécanisme de prise de vues (K2).

7. Système de communication selon l'une des revendications précédentes, **caractérisé en ce que** le dispositif de communication (K) est conçu sous la forme d'un dispositif optique de communication à courte portée.

8. Système de communication selon la revendication 6, **caractérisé en ce que** le dispositif de communication est conçu en vue de la transmission orientée du signal dans une direction dans l'espace, laquelle peut être modifiée par rapport à un axe longitudinal du véhicule à moteur (FZ1).

9. Système de communication selon la revendication 6 ou 7, **caractérisé en ce que** le système de communication optique présente une source lumineuse qui émet de la lumière de manière modulée vers l'extérieur du véhicule.

10. Procédé destiné à la désignation d'un partenaire de communication dans une communication de type véhicule à objet, selon lequel :
- une direction du regard (BR) d'un conducteur du véhicule à moteur (FZ1) est détectée ;
- un point d'intersection (SP) de la direction du regard du conducteur (F) est déterminé au moyen d'un pare-brise (W) du véhicule à moteur (FZ1) ;
- un repère (M) est projeté sur le pare-brise (W), selon lequel la position du repère (M) comprend le point d'intersection (SP) ; et
- un objet qui se trouve à l'extérieur du véhicule (FZ1), lequel objet est distingué au moyen du repère (M) à partir de la direction du regard (BR) du conducteur (F) qui a été détectée, est sélectionné comme étant le partenaire de communication ;
**caractérisé en ce qu'**une adresse de destination, laquelle a été émise par l'objet ainsi distingué, est reçue par le véhicule à moteur.

11. Procédé selon la revendication 10, **caractérisé en ce que** l'objet distingué est sélectionné par le conducteur (F) comme étant le partenaire de communication, par l'intermédiaire d'un mécanisme de confirmation (B) manuel ou à commande vocale.

12. Procédé selon la revendication 10 ou 11, **caractérisé en ce qu'**une sélection de l'adresse de destination de l'objet distingué est effectuée à partir d'une pluralité d'adresses de destination d'objets par la comparaison des données de position qui ont été reçues par l'objet distingué avec les données de position du véhicule à moteur (FZ1) et de la direction du regard (BR) du conducteur qui a été détectée.

13. Procédé destiné à la mise en place d'une communication de type véhicule à objet, pour lequel le partenaire de communication est désigné conformément à la revendication 10 ou 11, **caractérisé en ce qu'**une adresse de destination du partenaire de communication est calculée en fonction de :
- la prise d'une image du partenaire de communication au moyen d'un mécanisme de prise de vues (K2) ; et
- l'extraction d'un identifiant du partenaire de communication à partir de l'image prise ;
selon lequel l'identifiant est l'adresse de destination ou selon lequel l'adresse de destination est calculée à partir de l'identifiant.

14. Procédé selon l'une des revendications précédentes, **caractérisé en ce que** l'objet est un deuxième véhicule à moteur (FZ2) équipé d'un mécanisme de réception.
